# EUROPÄISCHE PATENTSCHRIFT

(11) **EP 1 399 685 B1**
(45) Veröffentlichungstag und Bekanntmachung des Hinweises auf die Patenterteilung: **26.10.2005**
(21) Anmeldenummer: 02700155.1
(22) Anmeldetag: 18.01.2002
(51) Int. Cl.: F16J 15/00

(54) **ABDICHTUNG FUR KURBELWELLENGEHAUSE**
SEAL FOR A CRANKSHAFT HOUSING
JOINT D'ETANCHEITE DESTINE A UN VILEBREQUIN

(43) Veröffentlichungstag der Anmeldung: 24.03.2004
(73) Patentinhaber: Federal-Mogul Sealing Systems Bretten GmbH, 75015 Bretten (DE)
(72) Erfinder: KLAUS, Bendl, 75015 Bretten (DE); MEIXNER, Bernd, 91710 Gunzenhausen (DE)
(86) Internationale Anmeldenummer: PCT/DE2002/000140
(87) Internationale Veröffentlichungsnummer: WO 2002/057666

(56) Entgegenhaltungen:
- EP-A- 0 133 851
- EP-A- 0 284 772
- DE-A- 2 753 170
- DE-A- 3 137 111
- US-A- 4 066 269
- US-A- 4 243 235
- US-A- 4 578 856
- US-A- 4 822 058
- US-A- 4 957 680
- US-A- 4 981 900

## Beschreibung

Die Erfindung betrifft eine Abdichtung für ein Gehäuse mit einer austretenden Welle, mit einem Trägerkörper aus spritzgießfähigem Kunststoff, mit einem Dichtelement aus einem Polytetrafluorethylen Kunststoff Compound zur Abdichtung der Welle und einem angeformten elastomeren Dichtkörper zur Abdichtung des Gehäuses sowie ein Verfahren zur Herstellung der Abdichtung. Eine derartige Dichtung ist aus dem Dokument EP-A-0 133 851 bekannt.

Die Abdichtung Kurbelwelle bei Kraftfahrzeugmotoren erfolgt durch eine Kombination aus dynamischen und statischen Dichtungen. Die Abdichtung der Welle erfolgt dabei durch einen Wellendichtring und die Abdichtung zum Zylinderkurbelgehäuse und zur Ölwanne wird über statische Dichtungen erzeugt. Diese dynamischen und statischen Dichtmittel wurden mit zunehmender Bauteilintegration in einem einzelnen Tragkörper integriert. Diese Art von Tragkörpern bestehen dabei, je nach Anwendungsfall, aus unterschiedlichen Materialien.

Die EP 0139503 A2 offenbart beispielsweise einen Tragkörper aus einem Kunststoffmaterial. Die Abdichtung zur Welle und zum Gehäuse erfolgt über elastomere Dichtelemente. Alternativ kann der Tragkörper aus Blech, Aluminium Gusseisen oder anderen Leichtmetallen hergestellt sein. Der elastomere Dichtkörper ist an einem Flansch des Tragkörpers direkt angeformt.
Es hat sich nun gezeigt, dass bei steigenden Belastungen im Motorbetrieb, wie beispielsweise sich verändernde Ölqualitäten und steigende Temperaturen, elastomere Dichtungen zunehmend an ihre Einsatzgrenzen gelangen. Aus diesem Grunde wurden die Dichtelemente für die Welle bereits aus einem Polytetrafluorethylen (PTFE) - Compound gebildet.

Die EP 0615085 B1 offenbart ein derartiges Dichtungskonzept. An ein Leichtmetall-Druckgussteil ist ein PTFE-Dichtelement angeformt. Da sich das Dichtelement aber nicht ohne weiteres mit dem Metall-Trägerkörper verbinden läßt, ist es notwendig, das Dichtelement über einen Elastomerkörper mit dem Trägerkörper zu verbinden. Diese Art der Verbindung weist den Nachteil auf, dass unterschiedliche Werkstoffe verwendet werden müssen, allein um das Dichtelement mit dem Trägerkörper zu verbinden. Hierdurch sind mehrere Arbeits-Schrittfolgen notwendig, die die Herstellungskosten in die Höhe treiben.

Um dieses Problem in den Griff zu bekommen hat man das Dichtelement zur Abdichtung der Welle aus einem PTFE-Compound gebildet, das den Werkstoff des Trägerkörpers als Compoundbestandteil enthält. Die DE 4442081 C2 offenbart eine solche Abdichtung. Die Veröffentlichung SAE Paper 970546 offenbart einen Tragkörper der nach der DE 4442081 C2 gebildet ist. Der Tragkörper besteht aus einem thermoplastischen Kunststoff. Thermoplastische Kunststoffe weisen den Vorteil auf, dass nach dem Spritzgießprozeß keine Nachbearbeitungen am Erzeugnis mehr notwendig sind. Werkzeugkosten und Werkzeugerneuerungskosten im Vergleich zu Druckgußwerkzeugen sind ebenfalls gering. Bei der Herstellung eines Trägerkörpers fallen so keine Zwischenschritte an. Der Nachteil von Trägerkörpern aus thermoplastischen Kunststoffen liegt aber darin, dass bei der späteren Verbindung des Trägerkörpers mit dem Kurbelwellengehäuse sogenannte Inserts notwendig sind. Es handelt sich hierbei um Metallhülsen, die in den thermoplastischen Körper eingegossen werden. Die Metallhülsen dienen zur Aufnahme der Befestigungsschrauben und bilden eine Verpressungsbegrenzung beim Anziehen der Schrauben. Ohne die Inserts lassen sich die thermoplastischen Trägerkörper nicht funktionssicher mit dem Kurbelwellengehäuse verbinden.

Der Erfindung liegt die Aufgabe zugrunde, eine gattungsgemäße Abdichtung dahingehend zu verbessern, dass auf die bisher üblichen Inserts verzichtet werden kann. Darüber hinaus soll ein Verfahren bereitgestellt werden mit dem die Herstellungskosten gesenkt werden.

Diese Aufgabe wird erfindungsgemäß durch die Merkmale des Hauptanspruches gelöst und durch das im Unteranspruch dargelegte Verfahren.

Vorteilhafte Ausgestaltungen der Erfindung sind in den Unteransprüchen dokumentiert.

Durch die Erfindung wird das bisher geglaubte Vorurteil überwindet, dass für gattungsgemäße Abdichtungen nur thermoplastische Kunststoffe zur Anwendung gelangen können. Es hat sich gezeigt, dass der erfindungsgemäße Trägerkörper hinsichtlich seiner Druckstandsfestigkeit so stabil ist, dass die Verbindung zum Kurbelwellengehäuse ohne Inserts erfolgen kann. Obwohl der Trägerkörper nach dem Gießprozeß noch nachbearbeitet werden muß sind die Herstellungskosten niedriger als bei thermoplastischen Trägerkörpern mit eingegossenen Inserts.

Die Erfindung ist anhand schematischer Zeichnungen in einem Ausführungsbeispiel dargestellt und wird im folgenden näher erläutert.

Es zeigen:
Fig. 1. Ansicht eines erfindungsgemäßen Trägerkörpers zur Abdichtung eines Kurbelwellengehäuses
Fig. 2. Ansicht gemäß Schnittlinie II-II der Figur 1
Fig. 3 Ansicht gemäß Schnittlinie III-III der Figur 1

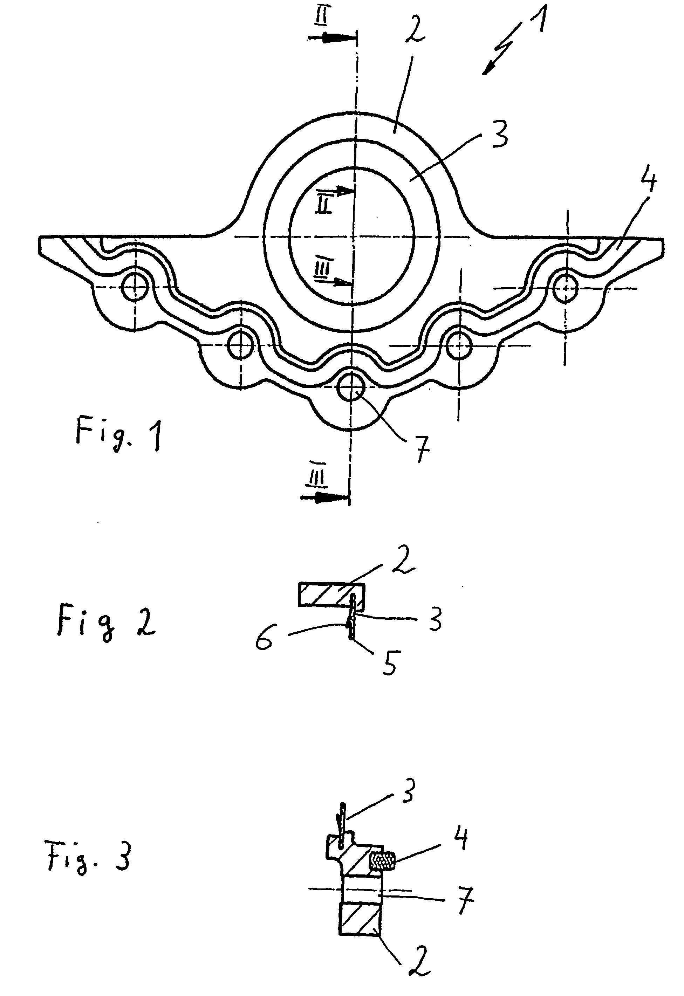

Die Figur 1 zeigt eine Abdichtung 1 für ein Gehäuse (nicht dargestellt) von Brennkraftmaschinen beispielsweise das Kurbelwellengehäuse.
Die Abdichtung besteht aus einem Trägerkörper 2 aus einem modifizierten duroplastischen Kunststoff. Die aus dem Gehäuse austretende Welle wird über ein Dichtelement 3 aus einem Polytetrafluorethylen Kunststoff Compound dynamisch abgedichtet. Das Dichtelement 3 ist als Scheibe ausgebildet und weist eine Dicht- 5 und eine Schutzlippe 6 auf. Dicht- und Schutzlippe 5,6 können durch Spalten der Scheibe erzeugt werden. Es ist ferner möglich, die dynamischen Dichtelemente aus zwei getrennten Schreiben auszuführen. Im eingebauten Zustand liegt die Dichtlippe 5 abgewinkelt auf der abzudichtenden Welle und übernimmt die Flüssikeitsabdichtung zum Gehäuse. Die Schutzlippe 6 dient lediglich als Staubschutz.
Die statische Abdichtung zum Gehäuse erfolgt über den Dichtkörper 4 der aus einem Kautschukmaterial besteht.
Wie aus der Figur 2 ersichtlich ist das Dichtelement 3 in dem duroplastischen Trägerkörper 2 eingebettet. Hierzu ist es notwendig, dass das Dichtelement zumindest im Bereich der Einbettung chemisch oder chemisch physikalisch vorbehandelt wird, damit das duroplastische Material eine Verbindung mit dem PTFE-Dichtelement 3 eingeht.

Die Figur 3 zeigt die Anordnung des Dichtkörpers 4 an dem Trägerkörper 2. Der Dichtkörper wird an den duroplastischen Kunststoff des Trägerkörpers angespritzt. Der Trägerkörper 2 weist eine Vielzahl von Bohrungen 7 zur Aufnahme von Befestigungsschrauben (nicht dargestellt) auf In diesen Bohrungen 7 sind bei thermoplastischen Trägerkörpern üblicherweise Metallhülsen eingegossen. Beim erfindungsgemäßen Trägerkörper 2 aus duroplastischen Kunststoff sind die Bohrungen 7 frei von Inserts.

## Patentansprüche

1. Verfahren zur Herstellung einer Abdichtung für ein Gehäuse mit einer austretenden Welle, mit einem Trägerkörper (2) aus spritzgießfähigem Kunststoff, mit einem Dichtelement (3) aus einem Polytetrafluorethylen Kunststoff Compound zur Abdichtung der Welle und einem angeformten elastomeren Dichtkörper (4) zur Abdichtung des Gehäuses, **dadurch gekennzeichnet, dass** das Dichtelement (3) chemisch oder chemisch physikalisch vorbehandelt wird und in eine temperierte Spritzgießform eingelegt wird, die zur Formgebung des Trägerkörpers (2) dient, dass anschließend ein duroplastischer Kunststoff in die Spritzgießform eingebracht wird, wodurch das Dichtelement (3) mit dem Kunststoff eine Verbindung eingeht und dass schließlich an den noch nicht vollständig vernetzten Kunststoff der Dichtkörper (4) angespritzt wird.

2. Verfahren nach Anspruch 1, **dadurch gekennzeichnet, dass** vor dem Anspritzen des Dichtkörpers (4) der Trägerkörper in eine andere Kavität oder Halbkavität des gleichen Werkzeuges oder eines anderen Werkzeuges eingelegt wird.

3. Abdichtung (1) für ein Gehäuse mit einer austretenden Welle, mit einem Trägerkörper (2) aus spritzgießfähigem Kunststoff, mit einem Dichtelement (3) aus einem Polytetrafluorethylen Kunststoff Compound zur Abdichtung der Welle und einem angeformten elastomeren Dichtkörper (4) zur Abdichtung des Gehäuses, hergestellt nach Ansprch 1, **dadurch gekennzeichnet, dass** der Trägerkörper (2) aus einem unmodifizierten oder modifizierten duroplastischen Kunststoff besteht dass der Dichtkörper (4) chemisch mit dem Trägerkörper (2) verbunden ist.

4. Abdichtung nach Anspruch 3, **dadurch gekennzeichnet, dass** der Kunststoff im wesentlichen aus einem Phenolharz besteht.

5. Abdichtung nach den Ansprüchen 3 und 4, **dadurch gekennzeichnet, dass** das Phenolharz mit elastomeren Werkstoff modifiziert ist.

6. Abdichtung nach den Ansprüchen 3 bis 5, **dadurch gekennzeichnet, dass** der elastomere Werkstoff aus einem chemisch ähnlichen Material besteht wie der Dichtkörper (4).

7. Abdichtung nach den Ansprüchen 3 bis 6, **dadurch gekennzeichnet, dass** das Material ein Acrylat-, Ethylen-Acrylat-, Fluor-Kautschuk, Nitril-Kautschuk oder ein hydrierter Nitril- Kautschuk ist.

8. Abdichtung nach einem der Ansprüche 3 bis 7, **dadurch gekennzeichnet, dass** das Dichtelement (3) aus einer radial gespalteten Scheibe oder zwei getrennten Scheiben besteht, die eine Dicht- (5) und eine Schutzlippe (6) bilden.

## Claims

1. Method for producing a seal for a housing which has an emergent shaft, said seal having a support body (2) formed from injection-mouldable plastics material, a sealing element (3) formed from a polytetrafluoroethylene plastics compound for sealing the shaft and an integrally moulded elastomeric sealing body (4) for sealing the housing, **characterised in that** the sealing element (3) is chemically pre-treated or chemically physically pre-treated and placed in a temperature-controlled injection mould which is used for shaping the support body (2), **in that** a thermosetting plastics material is then introduced into the injection mould, whereby the sealing element (3) becomes connected with the plastics material, and **in that** finally the sealing body (4) is injected onto the not yet completely cross-linked plastics material.

2. Method according to claim 1, **characterised in that**, before the sealing body (4) is injected on, the support body is inserted into some other cavity or semi-cavity of the same tool or of another tool.

3. Seal (1) for a housing which has an emergent shaft, said seal having a support body (2) formed from injection-mouldable plastics material, a sealing element (3) formed from a polytetrafluoroethylene plastics compound for sealing the shaft and an integrally moulded elastomeric sealing body (4) for sealing the housing, produced according to claim 1, **characterised in that** the support body (2) consists of an unmodified or modified thermosetting plastics material and **in that** the sealing body (4) is chemically connected to the support body (2).

4. Seal according to claim 3, **characterised in that** the plastics material consists substantially of a phenolic resin.

5. Seal according to claims 3 and 4, **characterised in that** the phenolic resin is modified with elastomeric material.

6. Seal according to claims 3 to 5, **characterised in that** the elastomeric material consists of a chemically similar material to that of the sealing body (4).

7. Seal according to claims 3 to 6, **characterised in that** the material is a polyacrylate rubber, an ethylene acrylate rubber, a fluorinated rubber, a nitrile rubber or a hydrogenated nitrile rubber.

8. Seal according to one of claims 3 to 7, **characterised in that** the sealing element (3) comprises a radially split disc or two separate discs which form a sealing lip (5) and a protective lip (6).

## Revendications

1. Joint d'étanchéité (1) pour un boîtier avec un arbre sortant, comprenant un corps de palier (2) en matériau susceptible d'être coulé et injecté, comprenant un élément d'étanchéité (3) en un composé de matériau polytétrafluoréthylène pour l'étanchéification de l'arbre et un corps d'étanchéité (4) en élastomère pour l'étanchéification du boîtier, **caractérisé en ce que** le corps de palier (2) est constitué à partir d'un matériau thermodurcissable non modifié ou modifié et **en ce que** le corps d'étanchéité (4) est lié chimiquement au corps de palier (2).

2. Joint d'étanchéité selon la revendication 1, **caractérisé en ce que** le matériau consiste essentiellement en une résine phénol.

3. Joint d'étanchéité selon les revendications 1 et 2, **caractérisé en ce que** la résine phénol est modifiée avec un matériau élastomère.

4. Joint d'étanchéité selon les revendications 1 à 3, **caractérisé en ce que** le matériau élastomère est constitué à partir d'un matériau chimiquement similaire au corps d'étanchéité (4).

5. Joint d'étanchéité selon les revendications 1 à 4, **caractérisé en ce que** le matériau est un caoutchouc acrylate, éthylène-acrylate, fluor, un caoutchouc nitrile ou un caoutchouc nitrile hydrogéné.

6. Joint d'étanchéité selon l'une des revendications 1 à 5, **caractérisé en ce que** l'élément d'étanchéité (3) est constitué à partir d'une rondelle radialement fendue ou de deux rondelles séparées, qui forme(nt) une lèvre d'étanchéité (5) et une lèvre de protection (6).

7. Procédé pour fabriquer un joint d'étanchéité pour un boîtier comportant un arbre sortant, avec un corps de palier (2) en matériau susceptible d'être coulé et injecté, comprenant un élément d'étanchéité (3) en composé de matériau polytétrafluoréthylène pour l'étanchéification de l'arbre et un corps d'étanchéité élastomère (4) pour l'étanchéification du boîtier, **caractérisé en ce que** l'élément d'étanchéité (3) est traité préalablement de manière chimique ou chimicophysique et est introduit dans un moule de coulage d'injection tempéré, qui sert à conférer la forme du corps de palier (2), **en ce qu'**ensuite un matériau thermodurcissable est introduit dans le moule de coulage d'injection, l'élément d'étanchéité (3) réalisant une liaison avec le matériau et **en ce que** finalement le corps d'étanchéité (4) est surmoulé sur le matériau qui n'est pas encore complètement réticulé.

8. Procédé selon la revendication 7, **caractérisé en ce qu'**avant le surmoulage du corps d'étanchéité (4), le corps de palier est disposé dans une autre cavité ou demi-cavité du même outil ou d'un autre outil.
